# EUROPEAN PATENT SPECIFICATION

(11) **EP 3 331 135 B1**
(45) Date of publication and mention of the grant of the patent: **17.02.2021**
(21) Application number: 15899581.1
(22) Date of filing: 27.07.2015
(51) Int. Cl.: H02K 11/00, H02K 5/18, H02K 5/20, H02K 5/22, H02K 9/06, H02K 11/33

(54) **ROTATING ELECTRIC MACHINE**
ELEKTRISCHE ROTATIONSMASCHINE
MACHINE ÉLECTRIQUE ROTATIVE

(43) Date of publication of application: 06.06.2018
(60) Divisional application: 20211889.9
(73) Proprietor: Hitachi Industrial Equipment Systems Co., Ltd., Tokyo 101-0022 (JP)
(72) Inventor: SAITO, Kenichi, Tokyo 101-0022 (JP); TASHIMA, Kiyomi, Tokyo 101-0022 (JP); SUZUKI, Toshifumi, Tokyo 101-0022 (JP); SUZUKI, Norinaga, Tokyo 101-0022 (JP); YONEOKA, Yasuei, Tokyo 101-0022 (JP); OKAFUJI, Kei, Tokyo 101-0022 (JP)
(74) Representative: Mewburn Ellis LLP
(86) International application number: PCT/JP2015/071184
(87) International publication number: WO 2017/017747

(56) References cited:
- DE-A1-102005 032 967
- JP-A- H09 163 681
- JP-A- 2008 048 579
- JP-A- 2009 027 863
- JP-A- 2013 233 036
- JP-A- 2014 192 951
- JP-A- 2015 077 019
- JP-A- 2015 100 265
- US-A1- 2012 319 542
- US-A1- 2014 062 236

## Description

### TECHNICAL FIELD

The present invention relates to a rotating electric machine, and more particularly to a rotating electric machine configured integrally with a control device including a power conversion device.

### BACKGROUND ART

In a pump installed outdoors, for example, a rotating electric machine for driving the pump may be installed alone. Therefore, the rotating electric machine may be installed with, in addition to a rotating electric machine main body, an inverter for supplying a driving current to the rotating electric machine and with a microcomputer inside thereof. Also including an interface (I/F) board constituting a wired or wireless interface internally and externally, a control board for performing various operational controls, and the like, it may be configured as a so-called rotating electric machine assembly in which the rotating electric machine, the inverter, and the like are integrally configured.

For example, Patent Literature 1 discloses a rotating electric machine in which a rotating electric machine main body and various control devices are integrally configured.

JP H09 163681 A proposes a dynamo-electric machine provided with a permanent magnet rotor having a permanent magnet 6, and a stator having an iron core 4, a winding 5 wound around the iron core, and a cooling mechanism 13 for cooling the winding. JP2013233036A proposes a circuit board for motor control which reduces its dimensions and increases an area on which electronic components are mounted when being placed around a support member. JP2015077019A proposes a rotary drive capable of achieving both suppression of transmission of oscillation generated in a motor to an electric power switching element and maintenance of cooling efficiency of the electric power switching element.

US 2012/0319542 A1 proposes an inverter-integrated driving module and manufacturing method thereof where phase coils are each configured by winding a conductor wire in a concentrated winding consecutively on three circumferentially consecutive tooth portions.

### CITATION LIST

### PATENT LITERATURE

PATENT LITERATURE 1: JP-A-2012-157194

### SUMMARY OF INVENTION

### TECHNICAL PROBLEM

In order to further improve efficiency of the rotating electric machine, however, there is a problem of reducing power consumption of the inverter and a heating value of the inverter.

In general, a semiconductor element constituting an inverter and an armature of a rotating electric machine are subject to an adverse effect of a decrease in life, malfunction, and the like due to a temperature rise caused by heat. Therefore, in order to provide a rotating electric machine having higher efficiency, it is an important issue to uniformly release the heat to the outside of a housing by dispersing heating elements and to improve cooling efficiency by reducing a thermal gradient.

The present invention has been achieved in view of the above-described problem in the related art, and it is an object thereof to provide a rotating electric machine having higher efficiency.

### SOLUTION TO PROBLEM

In order to solve the above problem a rotating electric machine according to claim 1 is provided. The present application includes a plurality of means for solving the above-described problem, and one example thereof is a rotating electric machine including a housing, a stator positioned inside the housing, a rotor that rotates by receiving magnetic flux from the stator, and a power conversion device that supplies a driving current to each winding of the stator. The plurality of power conversion devices is each positioned on a different flat portion formed on an outer periphery of the housing, and a winding supplied with a driving current by a first power conversion device among the plurality of power conversion devices is different from a winding supplied with a driving current by a second power conversion device, which is different from the first power conversion device.

It may also be a rotating electric machine including a housing, a stator positioned inside the housing, a rotor that rotates by receiving magnetic flux from the stator, a driving circuit having a switching element and that supplies a driving current to each winding of the stator, and a control circuit that transmits a control signal to the plurality of driving circuits. The plurality of switching elements is each positioned on a different installation surface formed on an outer periphery of the housing, and the installation surface has a shape along a first surface opposing the housing among external surfaces of the switching element. A winding supplied with a driving current by a first driving circuit among the plurality of driving circuits is different from a winding supplied with a driving current by a second driving circuit, which is different from the first driving circuit.

### ADVANTAGEOUS EFFECTS OF INVENTION

According to the present invention described above, it is possible to provide a rotating electric machine having higher efficiency.

### BRIEF DESCRIPTION OF DRAWINGS

FIG. 1 is an external perspective view illustrating an overall configuration of a rotating electric machine according to a first embodiment of the present invention.
FIG. 2 is an exploded perspective view illustrating each part of the rotating electric machine according to the first embodiment of the present invention.
FIG. 3 is an external perspective view illustrating an overall configuration of a rotating electric machine main body according to the first embodiment of the present invention.
FIG. 4 is an exploded perspective view illustrating each part of the rotating electric machine main body according to the first embodiment of the present invention.
FIG. 5 is an explanatory view of a position of an inverter board according to the first embodiment of the present invention.
FIG. 6 is a sectional view of the rotating electric machine according to the first embodiment of the present invention.
FIG. 7 is a sectional view of a rotating electric machine according to a second embodiment of the present invention.
FIG. 8 is a schematic diagram illustrating a circuit configuration of the rotating electric machine according to the first embodiment of the present invention.
FIG. 9 is an explanatory view of a position of an inverter according to the second embodiment of the present invention.
FIG. 10 is an explanatory view of a position of an inverter according to the first embodiment of the present invention.

### DESCRIPTION OF EMBODIMENTS

### First Embodiment

Hereinafter, a configuration of a first embodiment according to the present invention is described with reference to the drawings.

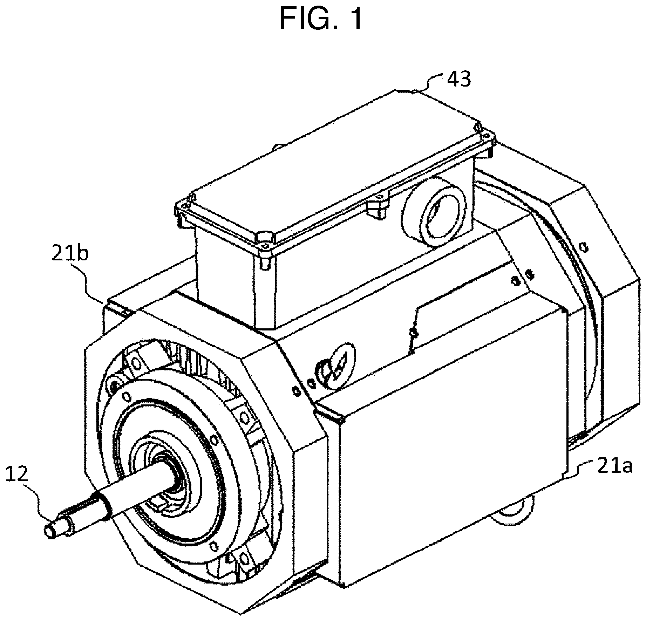

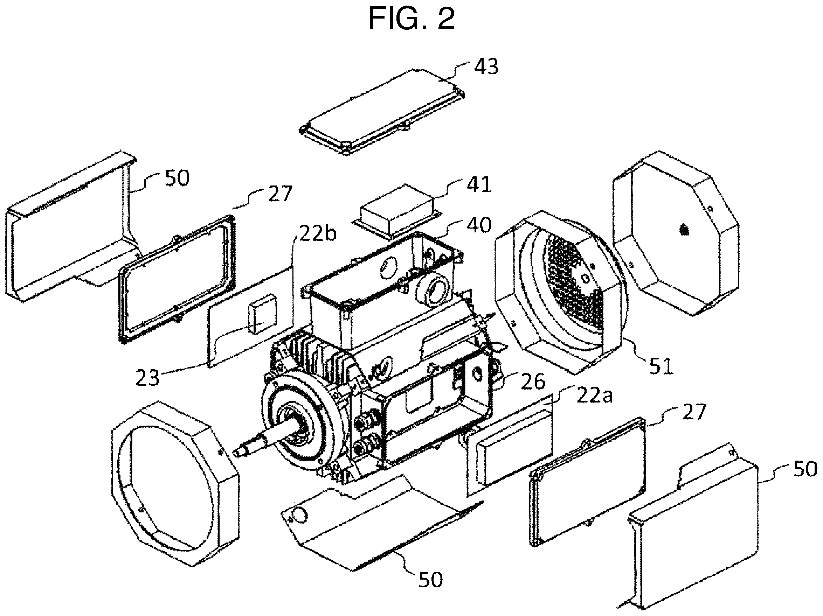

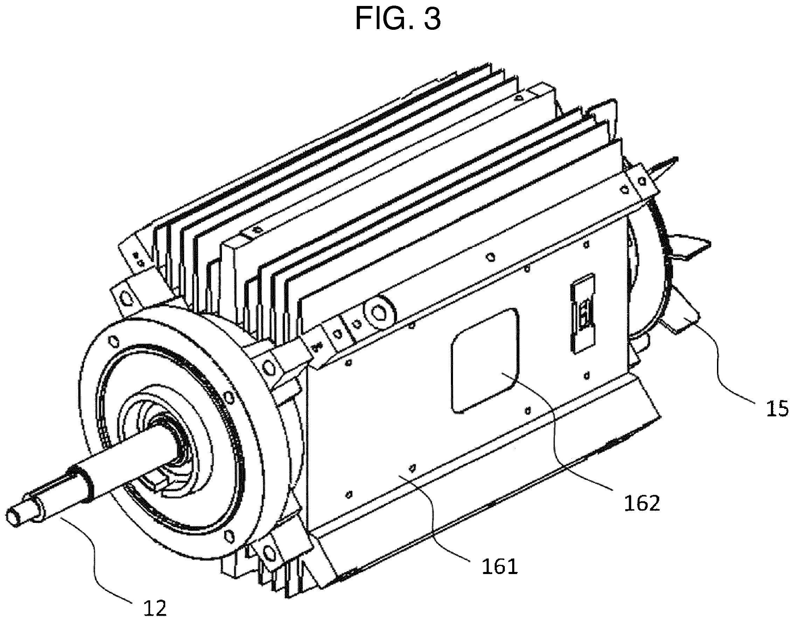

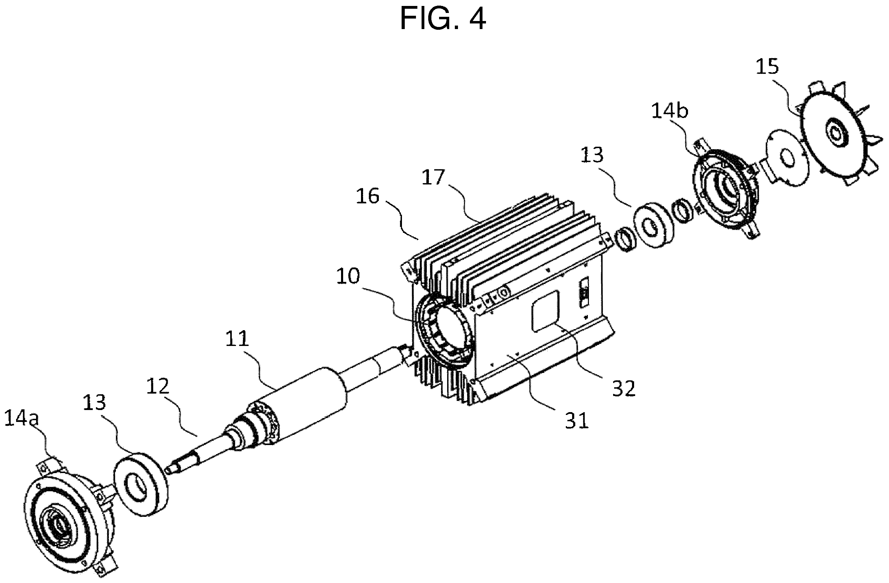

FIG. 1 is a perspective view of a rotating electric machine according to this embodiment, and FIG. 3 is a perspective view of a rotating electric machine main body before being installed with an inverter and the like. FIG. 2 illustrates an overall configuration of the rotating electric machine, and FIG. 4 illustrates an overall configuration of the rotating electric machine main body. Note that in this embodiment, the views illustrate a permanent magnet type rotating electric machine as one example; however, needless to say, it may also be a rotating electric machine of a different type.

As illustrated in FIG. 4, the rotating electric machine main body of this embodiment includes a stator 10, a rotor 11, a rotational shaft 12 penetrating through a central part of the rotor between a load side and a counter-load side, a bearing 13, a load side end bracket 14a, a counter-load side end bracket 14b, a fan 15 provided to the outside of the counter-load side end bracket, a housing 16, a plurality of cooling fins 17 provided to the housing, and the like.

The stator 10 includes a plurality of windings and is fixed inside the substantially cylindrical housing 16. Further, the rotor 11 is inserted into an inner space of the stator and is rotatably installed therein through a predetermined gap. Each of the windings of the stator is supplied with a driving current from a driving circuit of the inverter. In this embodiment, the number of the windings is a multiple of six. This is because the rotating electric machine according to this embodiment is a three-phase motor in which the windings correspond to U, V, and W, and because two inverters control different UVW sets. Hereinafter, a set of windings (or a windings set) refers to three windings of U, V, and W. A winding method of the windings may be concentrated winding or distributed winding. An effect of the present invention can be exerted as long as there are a winding driven by one inverter and a winding driven by the other inverter.

The rotor 11 is constituted of a plurality of permanent magnets that are cylindrically arranged. In this embodiment, the permanent magnet is used because the permanent magnet type rotating electric machine is exemplified; however, it may also be a rotor having a different configuration.

The rotational shaft 12 is a rotational shaft integrally formed with the rotor 11, and it transmits a rotational driving force of the rotating electric machine to a non-driving device (e.g., pump) connected to the load side.

The bearing 13 is provided to both of the load side and the counter-load side of the rotational shaft 12.

The end brackets fix the rotor 11, the rotational shaft 12, and the bearings 13 to each end portion of the housing 16 using both of the load side end bracket 14a and the counter-load side end bracket 14b. In fixing them, between the rotor and the end brackets, it is also possible to use a seal member, a washer, and the like through which the rotational shaft 12 penetrates.

The fan 15 is disposed on an outer side of the counter-load side end bracket 14b and is attached to the rotational shaft 12. It is configured such that, by the fan 15 being rotated accompanying rotation of the rotor 11, air from the outside is led to a periphery of the housing and heat exchange is achieved by the air passing through the fin 17, whereby it is possible to cool the rotating electric machine main body.

Into an inner space of the housing 16, an armature constituting the stator 10 of the permanent magnet type rotating electric machine is inserted and fixed. External appearance thereof is illustrated in FIG. 4, and the housing 16 has a plurality of cooling fins 17 extending in parallel along the rotational shaft on an outer peripheral surface thereof. In this embodiment in particular, since a flat portion 161 on which each of inverters 21a and 21b is installed is formed between the end brackets, there are formed the cooling fins 17 extending in a horizontal direction relative to the flat portion around the housing 16. The housing 16 and the cooling fins 17 are integrally formed by die casting of metal. Note that the cooling fins 17 may also be formed by a different method such as swaging. Further, in this example, aluminum having excellent thermal conductivity is applied; however, the present invention is not to be limited thereto.

The flat portion 161 is provided to an opposing position in a radial direction centering on the rotational shaft 12 so as to be separated from each other. Accordingly, since heat generated in an inverter 21 is dispersed evenly in the housing, the heat can be efficiently released into the air through the fins. Further, in a part where the flat portion 161 is not provided, the plurality of cooling fins 17 is provided to increase a surface area, whereby it is possible to further dissipate the heat generated by the stator and the rotor into the air. Furthermore, the flat portion 161 is provided with a recessed portion 162. A function of the recessed portion is described below.

Next with reference to FIGS. 1 and 2, there is described the rotating electric machine in which the housing 16 is integrally provided with the inverter 21 and the like. The rotating electric machine, in addition to the rotating electric machine main body illustrated in FIG. 3, includes the inverter 21 (constituted of an inverter board 22, an inverter case 26, an inner lid 27 for the case, and the like), a terminal box 40, an I/F board 41, a terminal box cover 43, a cover 50, a fan cover 51 provided with a mesh-like hole such that the air can pass therethrough, and the like.

The rotating electric machine is provided with the flat portions 161 at the opposing position from each other on the outer peripheral surface of the housing 16, and to each of the flat portions 161, the inverter case 26 having an external cross-section formed into a substantially rectangular parallelepiped shape is attached. On an outer periphery of the housing between the inverter cases 26, there is mounted the terminal box in which the I/F board 41 and a RST terminal block that supplies power to the UVW of the motor are housed on the outer side of the fins 17. Although only the I/F board 41 is illustrated in this embodiment, it is also possible to house, in the terminal box 40, a noise filter, a reactor, and the like as well as a circuit board for achieving a function enhancement such as a wireless communication, a higher-level control, and the like. Further, it is also possible to configure such that, not limited to the terminal box 40, these are housed in the inverter case 26 or another dedicated case and are mounted on the outside.

On each of the flat portions 161 of the housing 16, the inverter board 22 constituting the inverter 21 is mounted. The board 22 is a printed circuit board, for example, and on the board 22, there are implemented a power switching element (e.g., a power module, and an intelligent power module) 23, a diode, a capacitor, a micro control unit (MCU), and the like. By such electronic devices mounted on the board 22, there are achieved a driving circuit 25 that supplies a driving current to the set of the windings of the rotating electric machine, and a control circuit 24 that inputs a control signal to the driving circuit.

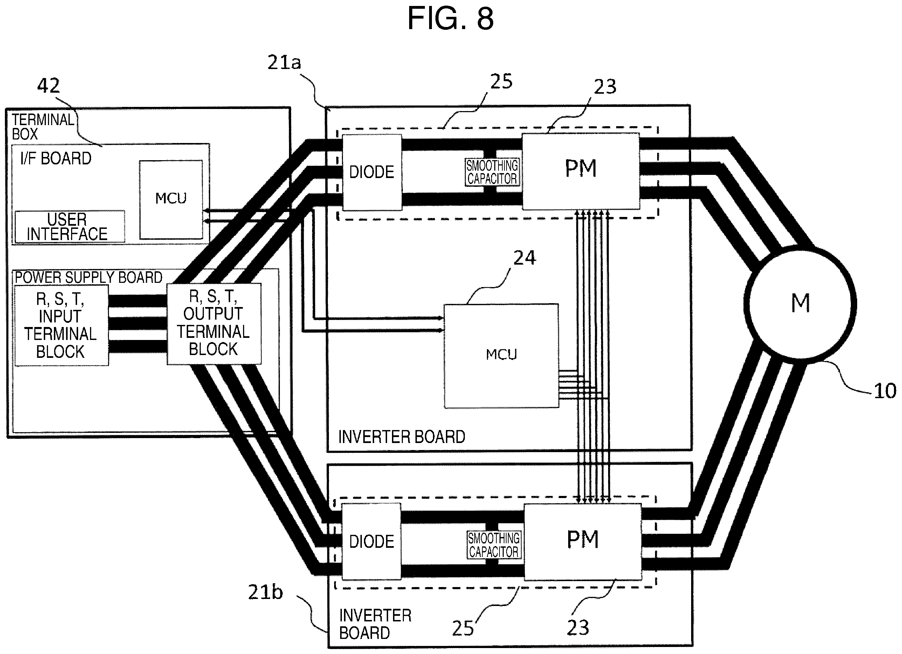

A power conversion means called the inverter in this embodiment, as illustrated in FIG. 8, is constituted of the control circuit 24 achieved by the MCU and the driving circuit 25 achieved by the power switching element 23 and the like. The control circuit 24 receives a "value of a frequency of a current to be supplied to the winding" from the I/F board housed in the terminal box and, based on the value, switches ON and OFF of each transistor in the power switching element in the driving circuit.

The driving circuit 25 is constituted of the diode, the capacitor, the power switching element 23, and the like. The current supplied through a terminal in the terminal box passes through the switching element 23, which is controlled by the control circuit 24, and becomes a current having a desired frequency, and the current is supplied to each of the windings of U, V, and W. At this time, part of the current of the switching element is also fed back to the control circuit, and the control circuit controls the switching element based on a current value that has been fed back.

In this embodiment, each of two inverters 21a and 21b supplies each of sets of stator windings with the driving current. In this way, by dispersing the inverter 21 to a plurality of positions and by supplying the driving current to each of the windings, it is possible to secure required output by the plurality of inverters in total while suppressing output by a single inverter. Therefore, a heating value of the single inverter is reduced. Further, since the inverters are provided at positions separated from each other, it is possible to significantly reduce heat concentration due to thermal interference between one inverter and the other inverter. As a result, it is possible to suppress reliability degradation due to a temperature rise of the inverter.

Furthermore, by providing two inverters, even in a case where one inverter fails, as long as the other inverter is working, the rotating electric machine can continue to operate with half the output. Therefore, it is possible to reduce a possibility of affecting another device due to a failure of the rotating electric machine. In this case, especially by using a configuration in which the winding controlled by one inverter and the winding controlled by the other inverter are alternately arranged in a circumferential direction, it is possible to rotate the rotor 11 more smoothly with half the output.

Further, in a case where two inverters are provided, but there is only one rotating electric machine to be controlled, it is necessary to synchronize the control circuits of the inverters and to control such that the sets of the windings rotate at the same rotation speed. In view of this, in this embodiment, it is configured such that the control circuit 24 for the two inverters is made common as illustrated in FIG. 8, and a control signal is transmitted in parallel to two driving circuits 25, whereby it is not necessary to synchronize two control circuits, achieving a simple control. Furthermore, since power consumption is reduced by an amount corresponding to one control circuit, it is possible to further suppress the heating value of the inverter. In this case, on the board to be housed in one of the inverter cases provided to the right and left of the housing, only a driving circuit 25b is implemented, and the control circuit 24 is not implemented. The driving circuit 25b receives a signal from the control circuit 24 housed in the other of the inverter cases, whereby the switching element is controlled. A signal exactly the same as the signal from the control circuit 24 is input to each of the driving circuits 25a and 25b in parallel.

Note that by incorporating a protection circuit for protecting overcurrent and the like in the driving circuits 25, it is also possible to configure such that the driving circuits 25 are protected in a case where a large current flows therein due to, for example, restriction of the rotating electric machine, a short circuit or a ground fault between the driving circuit and the windings, and rapid acceleration or deceleration. At this time, the control circuit 24 is capable of grasping a condition of the circuits by receiving error information from both of the protection circuits.

Further, as a modification of such case, it is also possible to configure such that the control circuit is placed in the terminal box 40, and only the driving circuits are placed inside of the inverter cases 26. In this way, each of the control circuit 24 and the driving circuit 25 may be provided on different planes. For example, it is possible to configure such that the control circuit 24 is housed in the terminal box, and the driving circuits 25 are respectively housed in the inverter cases 26a and 26b on both sides. In this case as well, since the driving circuits having a large heating value are dispersedly arranged, it is possible to obtain the effect of the present invention of improving cooling efficiency. Further, by providing the control circuit 24 in the terminal box, it is possible to reduce a size of the boards to be housed in the inverter cases by a size corresponding to the control circuit 24. By arranging the board having the smaller size near either of the load-side or the counter-load side, by reducing an area of the flat portion 161, and by providing a cooling fin to another part of an outer periphery, it is possible to further improve the cooling efficiency.

In installing the inverter board 22, the inverter board 22 having the control circuit 24 and the driving circuit 25 is housed in the inverter case 26 and is installed on the flat portion 161 formed on a part of the housing 16 of the rotating electric machine. Then, the inner lid 27 and the cover 50 for protection are installed from the outside. At this time, by housing and sealing the inverter board in the inverter case, it is protected from water, dust, direct sunlight, and the like, and environmental resistance is achieved, whereby it is capable of being installed outdoors alone.

The power switching element 23 having the largest heating value among components implemented on the inverter board is placed on the recessed portion 162 provided on the flat portion 161, and the inverter board is fixed thereto. By using such configuration, heat generated in the power switching element 23 is efficiently released to the housing 16 having excellent thermal conductivity, whereby it is possible to suppress the reliability degradation due to the temperature rise of the inverter. A depth of the recessed portion may be a depth equivalent to a part of the switching element 23 or may be a depth such that the switching element 23 is substantially buried.

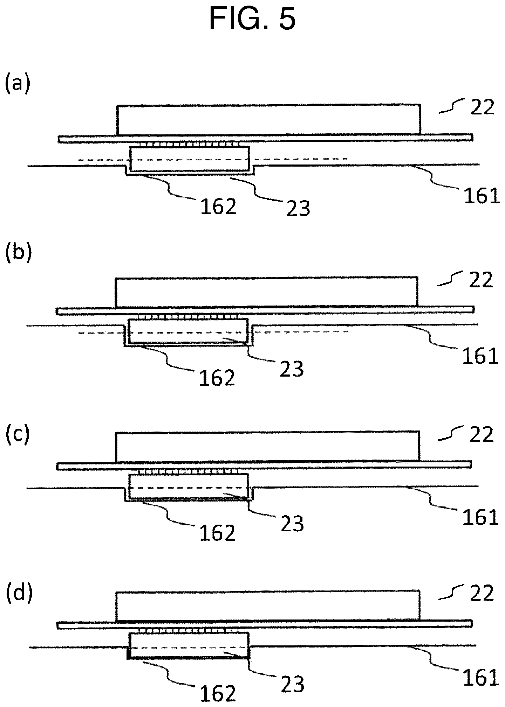

In FIG. 5, examples of changing the depth of the recessed portion 162 are illustrated. The recessed portion 162 has been provided to release the heat also from a surface other than a top surface of the power switching element 23 (surface opposing the housing 16). Therefore, the deeper the depth of the recessed portion 162 is, the easier the heat is transmitted to a side surface of the recessed portion 162 from a side surface of the switching element 23, whereby cooling performance is improved. As an example of installation in which the thermal conductivity is emphasized, as in FIG. 5(d), a position of the inverter board 22 may be determined such that the power switching element 23 contacts a bottom surface (also referred to as an installation surface) of the recessed portion and a side surface of the recessed portion. It is also possible to install the switching element 23 by applying a filler having excellent thermal conductivity such as liquid or sheet-like silicon thereto in order to improve smoothness of the bottom surface of the recessed portion. By applying the silicon, since fine irregularities on the bottom surface of the recessed portion is filled with the silicon, the switching element and the bottom surface of the recessed portion are adhered to each other as air existing there-between is reduced, whereby the cooling efficiency can be further improved.

To perform positioning at the time of installation more easily, as in FIG. 5(c), it is preferable to form the depth of the recessed portion as a depth near a central part of the switching element. At this time, by arranging such that the switching element 23 is not in contact with the bottom surface of the recessed portion and a side wall of the recessed portion, it is possible to prevent poor contacting due to a load applied to a terminal portion connecting the switching element to the board caused by vibration of the housing 16. Of course, depending on a radiation amount and the number of processes that can be used for positioning, the depth of the recessed portion and a distance between the switching element and the bottom surface of the recessed portion or a wall surface of the recessed portion can be changed at any time.

In this embodiment, the flat portion 161 and the recessed portion 162, which are in parallel to the inverter board, have been provided merely from a viewpoint of ease of installation; however, for a purpose of improving radiation performance, it is only necessary to form the installation surface close to a radiating surface of the switching element 23 on the housing 16. For example, it is also possible to cut a small part of the substantially cylindrical housing 16 to form the recessed portion 162 having a smooth bottom surface, dispose the board to a position where the bottom surface of the recessed portion is opposed to the switching element 23, and to fix an end portion of the board to an arc-shaped housing surface with a pin. It is also possible to form a smooth surface by putting metal on a part of the housing surface and use it as the installation surface by bringing it close to the switching element 23.

The cover 50 that covers an outer periphery of the rotating electric machine main body is formed, for example, by pressing and the like of a plate-like resonance suppression material and forming it into a predetermined shape. Furthermore, by installing a sound absorbing material, a soundproofing material, a damping material, a vibration proof material, and the like inside the cover 50, it is possible to suppress noise and vibration.

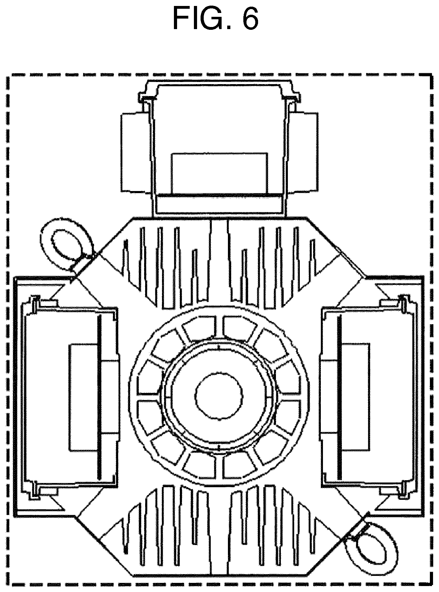

Since the permanent magnet rotating electric machine is used in this embodiment, downsizing is possible as compared with a case of using an induction type rotating electric machine. Furthermore, by arranging an inverter in a space secured by downsizing, it is possible to integrally form the inverter without increasing an external size thereof. As a size comparison example, an external size of an induction motor having output as much as that in this embodiment is indicated by a broken line in FIG. 6. As it is clear from FIG. 6, it is possible to provide an integral-type rotating electric machine assembly of this embodiment in substantially the same size as the external size of the induction type rotating electric machine.

In view of the above, the rotating electric machine according to this embodiment includes the housing 16, the stator 10 positioned inside the housing 16, the rotor 11 that rotates together with the rotational shaft 12 by receiving magnetic flux from the stator 10, and the power conversion device 21 that supplies a driving current to each of the windings of the stator 10. The plurality of power conversion devices 21 is each positioned on the different flat portion 161 formed on an outer periphery of the housing 16, and a winding supplied with a driving current by a first power conversion device 21a is different from a winding supplied with a driving current by a second power conversion device 21b.

The rotating electric machine according to this embodiment may also include the housing 16, the stator 10 positioned inside the housing 16, the rotor 11 that rotates together with the rotational shaft 12 by receives magnetic flux from the stator 10, the driving circuit 25 having the switching element 23 and that supplies a driving current to each of the windings of the stator 10, and the control circuit 24 that transmits a control signal to the driving circuit 25. The plurality of switching elements 23 is each positioned on the different installation surface 162 formed on the outer periphery of the housing 16, and the installation surface 162 has a shape along a first surface opposing the housing 16 of among external surfaces of the switching element 23. A winding supplied with a driving current by a first driving circuit is different from a winding supplied with a driving current by a second driving circuit.

In this way, by dispersing the inverters (or driving circuits) that control each of the windings constituting the rotating electric machine to multiple places, it is possible to disperse an amount of heat generated from the power switching elements of the inverters, whereby it is possible to provide the rotating electric machine having higher efficiency.

### Second Embodiment

In a second embodiment to which the present invention is applied, a configuration having the different number of the inverters from the first embodiment is described. Note, however, that a description is appropriately omitted for a part common with the first embodiment.

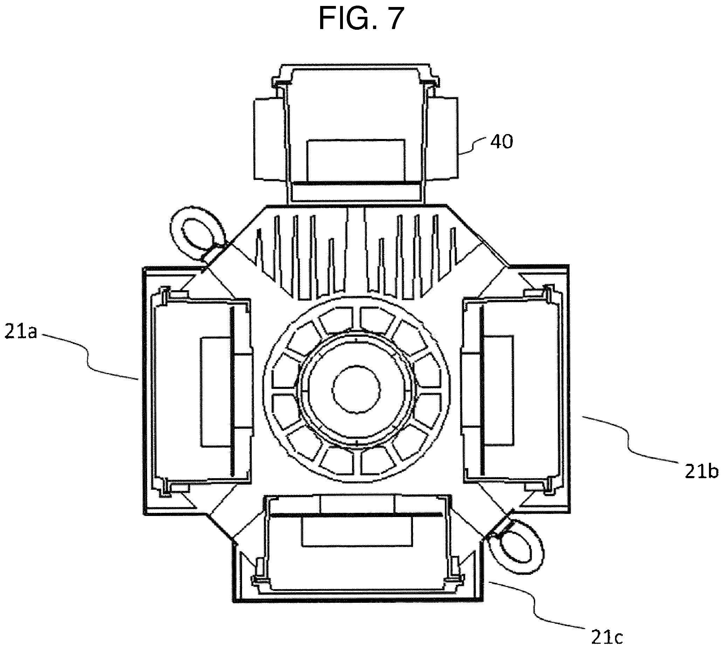

FIG. 7 illustrates a structure in which inverters are provided to three places In this structure, the number of sets of the windings of the stator is a multiple of three, and the inverter that controls each of the sets of the windings is provided to three places. First, an inverter 21a and an inverter 21b are provided to opposing positions in a radial direction centering on the rotational shaft 12, and an inverter 21c is provided to an opposing position in the radial direction of the terminal box 40.

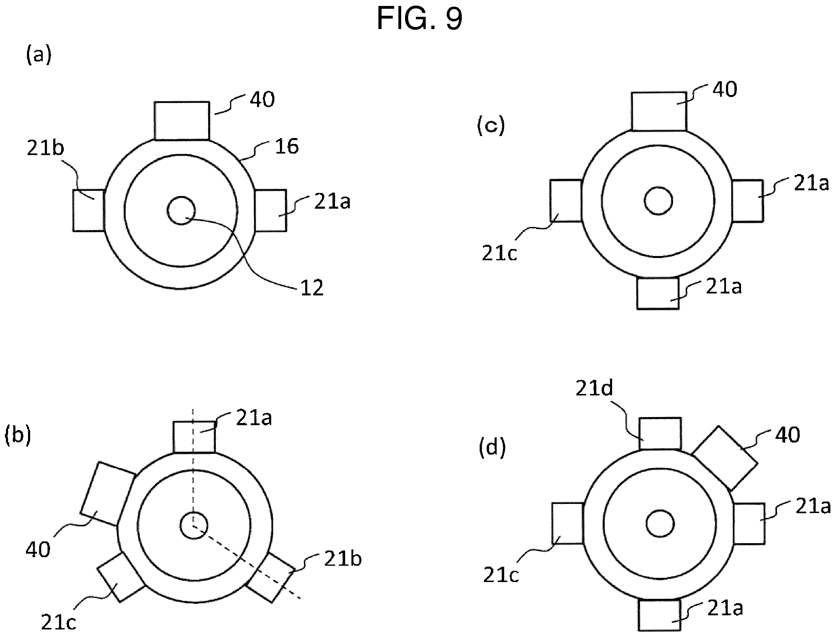

Further, another modification is illustrated in FIG. 9. FIG. 9(a) is a schematic view of the first embodiment, and FIG. 9(c) is a schematic view of FIG. 7. FIGS. 9(b) and (d) are schematic views in which the inverters are separated at equal intervals. An angle formed by the inverter 21a and the inverter 21b and the rotational shaft 12 in FIG. 9(b) of this embodiment is about 120 degrees. In this way, it is also possible to configure such that the inverters are dispersedly arranged at the equal intervals in a circumferential direction, and the terminal box is arranged between the inverters. By arranging the inverters being separated at the equal intervals, it is possible to release heat evenly to the housing and to significantly reduce heat concentration due to thermal interference between the inverters. As a result, it is possible to suppress reliability degradation due to a temperature rise of the inverter.

In this way, by increasing the number of the sets of the windings and increasing the number of corresponding inverters, it is possible to further suppress the heating value per the inverter.

### Third Embodiment

In a third embodiment to which the present invention is applied, there is described a case in which a position of providing an inverter in a shaft direction is different from that in the first embodiment. Note, however, that a description is appropriately omitted for a part common with the first embodiment.

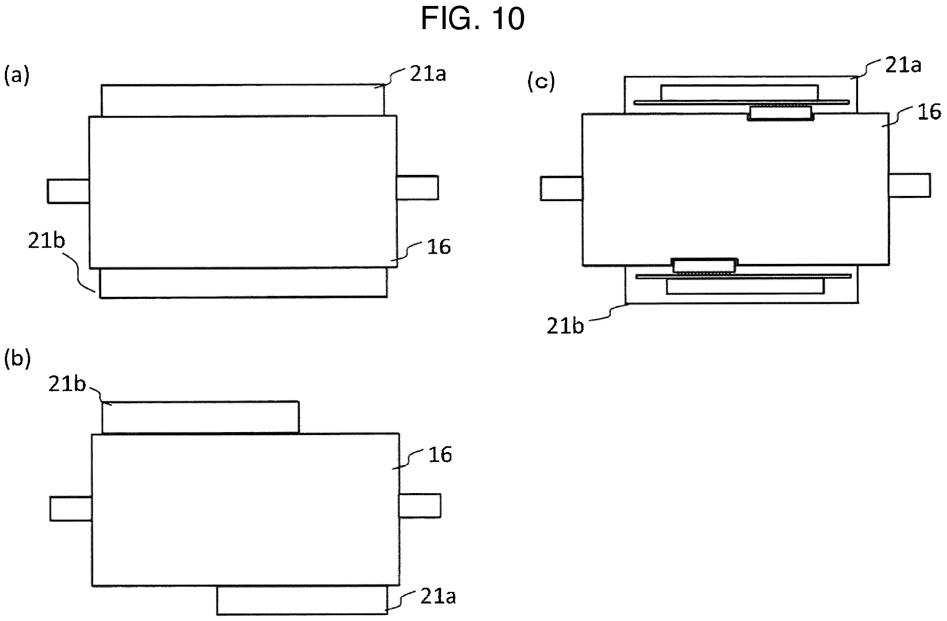

FIG. 10 is a schematic view of a rotating electric machine viewed in a direction opposite to the terminal box 40 in a case where there are two inverters. FIG. 10(a) is a schematic view of the first embodiment, and FIGS. 10(b) and 10(c) are modifications thereof. In FIG. 10(b), there is illustrated a configuration in which two inverters are provided on opposing surfaces centering on the rotational shaft 12 in a shifted manner such that one of the inverters is provided on the counter-load side while the other thereof is provided on the load side.

In FIG. 10(c), the positions of the inverter cases 26 are not shifted in the shaft direction while a direction of the inverter boards 22a and 22b therein is changed, whereby the switching elements 23, which are heat sources, are provided to positions that are shifted in the shaft direction.

In this way, by providing the inverters and the switching elements in the shifted manner in the shaft direction, it is possible to further release the heat efficiently to the entire housing.

Note that in FIG. 10, the case in which there are two inverters is exemplified; however, a configuration combined with the second embodiment in which three or more inverters are arranged in the shifted manner in the shaft direction or the like is also within the concept of the present invention. In addition, the rotating electric machine of the present invention is applicable to an electric motor (motor) and a generator.

**REFERENCE SIGNS LIST**

| | |
|---|---|
| Stator | 10 |
| Rotor | 11 |
| Rotational shaft | 12 |
| Bearing | 13 |
| End bracket | 14 |
| Fan | 15 |
| Housing | 16 |
| Fin | 17 |
| Inverter | 21 |
| Inverter board | 22 |
| Power switching element | 23 |
| Control circuit | 24 |
| Driving circuit | 25 |
| Inverter case | 26 |
| Inner lid for an inverter | 27 |
| Terminal box | 40 |
| I/F board | 41 |
| Terminal box cover | 43 |
| Cover | 50 |
| Fan cover | 51 |
| Flat portion | 161 |
| Recessed portion | 162 |

## Claims

1. A rotating electric machine comprising:
a housing (16);
a stator (10) positioned inside the housing (16);
a rotor (11) configured to rotate by receiving magnetic flux from the stator (10);
wherein the stator (10) includes a plurality of winding sets, and each winding set comprises three windings, one of each phase; and
a plurality of power conversion devices (21) configured to supply a driving current to the plurality of winding sets of the stator (10), wherein
the plurality of power conversion devices (21) are each provided on a different flat portion (161), on an outer periphery of the housing (16), positioned so as to be separated from each other in a circumferential direction; and
a winding set supplied with a driving current by a first power conversion device (21a) among the plurality of power conversion devices (21) is different from a winding set supplied with a driving current by a second power conversion device (21b) being different from the first power conversion device (21a); and
the flat portions (161) are positioned so as to be separated from each other in a circumferential direction;
wherein:
the power conversion device includes a driving circuit (25) having an inverter board (22) and a switching element (23) connected to the inverter board (22);
the flat portion (161) has a recessed portion (162) in a part thereof; and
the inverter board (22) is positioned at a position where a first surface of the switching element (23), opposing a board side of the switching element (23), and a bottom surface of the recessed portion (162) are in contact with each other.

2. The rotating electric machine according to claim 1,
wherein the housing includes a cooling fin at the outer periphery; and
wherein the cooling fin is positioned between the first power conversion device and the second power conversion device

3. The rotating electric machine according to claim 1, wherein
the flat portions are positioned at equal intervals in the circumferential direction.

4. The rotating electric machine according to claim 3, wherein
the number of the power conversion devices is two, and
two flat portions are positioned so as to oppose each other centering on a rotational shaft of the rotor.

5. The rotating electric machine according to claim 1, wherein
the first power conversion device includes a driving circuit supplying the driving current, and a control circuit outputting a control signal to the driving circuit, and
the second power conversion device includes a driving circuit supplying the driving current, and the driving circuit of the second power conversion device operates by the control signal from a first power conversion device.

6. The rotating electric machine according to claim 1, wherein
the flat portion and the switching element are partly in contact with each other.

## Patentansprüche

1. Elektrische Rotationsmaschine, die Folgendes umfasst:
ein Gehäuse (16);
einen Stator (10), der im Inneren des Gehäuses (16) angeordnet ist;
einen Rotor (11), der ausgelegt ist, um durch Empfangen eines Magnetflusses von dem Stator (10) zu rotieren;
wobei der Stator (10) eine Vielzahl von Wicklungssätzen umfasst und jeder Wicklungssatz drei Wicklungen umfasst, wobei jeweils eine von jeder Phase ist; und
eine Vielzahl von Leistungswandlervorrichtungen (21), die ausgelegt sind, um die Vielzahl von Wicklungssätzen des Stators (10) mit einem Ansteuerstrom zu versorgen, wobei
die Vielzahl von Leistungswandlervorrichtungen (21) jeweils auf einem unterschiedlichen flachen Abschnitt (161) auf einem Außenumfang des Gehäuses (16) bereitgestellt sind und so angeordnet sind, dass sie von einander in einer Umfangsrichtung beabstandet sind; und
ein mit einem Ansteuerstrom von einer ersten Leistungswandlervorrichtung (21a) aus der Vielzahl von Leistungswandervorrichtungen (21) versorgter Wicklungssatz sich von einem mit einem Ansteuerstrom von einer zweiten Leistungswandlervorrichtung (21b), die sich von der ersten Leistungswandlervorrichtung (21a) unterscheidet; versorgten Wicklungssatz unterscheidet; und
die flachen Abschnitte (161) so angeordnet sind, dass sie voneinander in einer Umfangsrichtung beabstandet sind;
wobei:
die Leistungswandlervorrichtung eine Ansteuerschaltung (25) mit einer Wechselrichterplatine (22) und einem mit der Wechselrichterplatine (22) verbundenes Schaltelement (23) umfasst;
der flache Abschnitt (161) einen vertieften Abschnitt (162) in einem Teil davon aufweist; und
die Wechselrichterplatine (22) an einer Position angeordnet ist, wo eine erste Oberfläche des Schaltelements (23), die einer Platinenseite des Schaltelements (23) gegenüberliegt, und eine Bodenfläche des vertieften Abschnitts (162) einander berühren.

2. Elektrische Rotationsmaschine nach Anspruch 1,
wobei das Gehäuse eine Kühlrippe am Außenumfang umfasst; und
wobei die Kühlrippe zwischen der ersten Leistungswandlervorrichtung und der zweiten Leistungswandlervorrichtung angeordnet ist.

3. Elektrische Rotationsmaschine nach Anspruch 1, wobei die flachen Abschnitte in gleichmäßigen Abständen in Umfangsrichtung angeordnet sind.

4. Elektrische Rotationsmaschine nach Anspruch 3, wobei
die Anzahl von Leistungswandlervorrichtungen zwei beträgt und
zwei flache Abschnitte so angeordnet sind, dass sie einander über eine Rotationswelle des Rotors als Mittelpunkt gegenüberliegen.

5. Elektrische Rotationsmaschine nach Anspruch 1, wobei
die erste Leistungswandlervorrichtung eine Ansteuerschaltung, die den Ansteuerstrom liefert, und eine Steuerschaltung, die ein Steuersignal an die Ansteuerschaltung ausgibt, umfasst und
die zweite Leistungswandlervorrichtung eine Ansteuerschaltung, die den Ansteuerstrom liefert, umfasst und die Ansteuerschaltung der zweiten Leistungswandlervorrichtung durch das Steuersignal der ersten Leistungswandlervorrichtung betrieben wird.

6. Elektrische Rotationsmaschine nach Anspruch 1, wobei
der flache Abschnitt und das Schaltelement einander teilweise berühren.

## Revendications

1. Machine électrique rotative comprenant :
un boîtier (16) ;
un stator (10) positionné à l'intérieur du boîtier (16) ;
un rotor (11) configuré pour tourner en recevant un flux magnétique à partir du stator (10) ;
dans lequel le stator (10) comprend une pluralité d'ensembles d'enroulements, et chaque ensemble d'enroulements comprend trois enroulements, un de chaque phase ; et
une pluralité de dispositifs de conversion d'énergie (21) configurés pour fournir un courant d'attaque à la pluralité d'ensembles d'enroulements du stator (10), dans lequel
la pluralité de dispositifs de conversion d'énergie (21) sont prévus chacun sur une partie plate différente (161), sur une périphérie externe du boîtier (16), positionnés de manière à être séparés les uns des autres dans une direction circonférentielle ; et
un ensemble d'enroulements alimenté en courant d'attaque par un premier dispositif de conversion d'énergie (21a) parmi la pluralité de dispositifs de conversion d'énergie (21) est différent d'un ensemble d'enroulements alimenté en courant d'attaque par un second dispositif de conversion d'énergie (21b) étant différent à partir du premier dispositif de conversion d'énergie (21a) ; et
les parties plates (161) sont positionnées de manière à être séparées les unes des autres dans une direction circonférentielle ;
dans laquelle :
le dispositif de conversion d'énergie comprend un circuit d'attaque (25) ayant un circuit inverseur (22) et un élément de commutation (23) connecté au circuit inverseur (22) ;
la partie plate (161) a une partie évidée (162) dans une partie de celle-ci ; et
le circuit inverseur (22) est positionnée dans une position où une première surface de l'élément de commutation (23), opposée à un côté de circuit de l'élément de commutation (23), et une surface inférieure de la partie évidée (162) sont en contact l'une avec l'autre.

2. Machine électrique rotative selon la revendication 1,
dans laquelle le boîtier comprend une ailette de refroidissement au niveau de la périphérie extérieure ; et
dans laquelle l'ailette de refroidissement est positionnée entre le premier dispositif de conversion d'énergie et le second dispositif de conversion d'énergie.

3. Machine électrique rotative selon la revendication 1, dans laquelle
les parties plates sont positionnées à des intervalles égaux dans la direction circonférentielle.

4. Machine électrique rotative selon la revendication 3, dans laquelle
le nombre des dispositifs de conversion d'énergie est de deux, et
deux parties plates sont positionnées de manière à être opposée l'une à l'autre avec un centrage sur un arbre de rotation du rotor.

5. Machine électrique rotative selon la revendication 1, dans laquelle
le premier dispositif de conversion d'énergie comprend un circuit d'attaque alimentant le courant d'attaque, et un circuit de commande délivrant en sortie un signal de commande au circuit d'attaque, et
le second dispositif de conversion d'énergie comprend un circuit d'attaque fournissant le courant d'attaque, et le circuit d'attaque du second dispositif de conversion d'énergie fonctionne par l'intermédiaire du signal de commande d'un premier dispositif de conversion d'énergie.

6. Machine électrique rotative selon la revendication 1, dans laquelle
la partie plate et l'élément de commutation sont partiellement en contact l'un avec l'autre.
